**Europäisches Patentamt**

**European Patent Office**

**Office européen des brevets**

(19)

(11) Numéro de publication : **0 285 521 B1**

(12)

# FASCICULE DE BREVET EUROPEEN

(45) Date de publication du fascicule du brevet :
**25.03.92 Bulletin 92/13**

(51) Int. Cl.⁵ : **H04N 5/58**

(21) Numéro de dépôt : **88400801.2**

(22) Date de dépôt : **01.04.88**

(54) **Système de visualisation de données lumineuses, à lisibilité améliorée.**

(30) Priorité : **03.04.87 FR 8704722**

(43) Date de publication de la demande :
**05.10.88 Bulletin 88/40**

(45) Mention de la délivrance du brevet :
**25.03.92 Bulletin 92/13**

(84) Etats contractants désignés :
**DE GB**

(56) Documents cités :
**EP-A- 0 145 966**
**FR-A- 2 100 454**
**PATENT ABSTRACTS OF JAPAN, vol. 9, no. 65 (E-304)[1788], 26 mars 1985, page 79 E 304; & JP-A-59 202 779 (MATSUSHITA DENKI SAN-GYO K.K.) 16-11-1984**

(73) Titulaire : **THOMSON-CSF**
**51, Esplanade du Général de Gaulle**
**F-92800 Puteaux (FR)**

(72) Inventeur : **Barbier, Bruno**
**THOMSON-CSF SCPI 19, avenue de Messine**
**F-75008 Paris (FR)**
Inventeur : **Ediar, Serge**
**THOMSON-CSF SCPI 19, avenue de Messine**
**F-75008 Paris (FR)**
Inventeur : **Brun, Jean**
**THOMSON-CSF SCPI 19, avenue de Messine**
**F-75008 Paris (FR)**

(74) Mandataire : **Turlèque, Clotilde et al**
**THOMSON-CSF SCPI**
**F-92045 PARIS LA DEFENSE CEDEX 67 (FR)**

## Description

La présente invention concerne un système de visualisation de données traduites sous forme d'une représentation lumineuse, et dont la lisibilité est améliorée pour tenir compte des fluctuations de l'environnement lumineux.

La représentation des données lumineuses peut être une image électronique ou un affichage lumineux.

L'invention est envisagée, plus particulièrement, pour des dispositifs de visualisation tête basse dans le domaine aéronautique.

La visualisation d'une image électronique, notamment pour une application tête basse, s'effectue généralement sur l'écran d'un tube à rayons cathodiques ou sur un écran plat. Ces derniers se subdivisent en deux catégories principales, les écrans plats passifs qui produisent une modulation de lumière, par exemple des cellules à cristaux liquides, et les écrans plats actifs qui émettent de la lumière, par exemple les panneaux à plasma ou électroluminescents.

Dans ces systèmes de visualisation la représentation lumineuse est soumise à un éclairement variable du fait de l'environnement lumineux lui-même variable. Il en résulte des difficultés éventuelles de lisibilité de la représentation affichée ; c'est le cas notamment si l'éclairement local est trop fort pour une représentation d'image sur un écran cathodique.

Il est connu de prévoir un réglage manuel du niveau de luminance de l'image sur les dispositifs de visualisation d'image électronique.

Ce réglage est insuffisant car, dans le cas d'une visualisation tête basse sur une planche de bord, l'image électronique est présentée au pilote dans un champ d'une vingtaine de degrés et l'image globale vue par l'observateur est constituée de cette image électronique à laquelle est superposée une distribution lumineuse parasite due à l'environnement. Dans le champ de vision de 20° la distribution lumineuse parasite est le rayonnement ambiant réfléchi par l'écran de visualisation. En outre, le rayonnement lumineux parasite comporte celui qui est compris dans le champ total de perception de l'observateur, champ global dont la valeur atteint pratiquement 180°. Pour une application tête basse envisagée cette lumière parasite est celle provenant de l'extérieur à travers les verrières du cokpit.

L'appréciation de la qualité de l'image globale est fonction de l'importance de cette luminance parasite. La qualité de l'image dépend, en plus, de la répartition spatio-temporelle de la totalité du champ perçu par l'oeil c'est-à-dire d'une part, de la valeur et de la répartition spatiale de l'environnement lumineux comprenant l'image visualisée et le rayonnement parasite réfléchi et le reste du champ visuel perçu, et d'autre part, de la valeur et de la répartition spatiale qu'avait cet environnement lumineux dans les instants précédents pour tenir compte en particulier des phénomènes de persistance rétiniènes de l'observateur et de variations lentes du diamètre pupillaire.

Le but de l'invention est d'améliorer la lisibilité de la représentation lumineuse en tenant compte de cette répartition spatio-temporelle de luminance correspondant à la lumière parasite réfléchie par l'écran de visualisation et à la lumière parasite perçue dans le champ global extérieur à celui de vision de l'affichage.

Suivant l'invention, le système de visualisation est équipé de dispositifs capteurs pour mesurer par photodétection les rayonnements parasites en question et les traiter de manière à influer sur la luminance de la représentation visualisée afin d'en optimiser la lisibilité.

Selon l'invention, il est réalisé un système de visualisation d'une image lumineuse de données sur l'écran d'un dispositif de visualisation, comportant un moyen de réglage manuel de la luminosité de l'image et des moyens de réglage automatique de la luminosité de l'image, ces derniers utilisant deux capteurs photoélectriques, un premier capteur monté fixe et disposé à proximité de l'écran et un deuxième capteur pour détecter un éclairement ambiant, ledit système étant caractérisé en ce que ledit premier capteur est orienté de manière à capter un éclairement ambiant représentatif de la luminance réfléchie par l'écran, ledit deuxième capteur étant situé à distance de l'écran pour détecter un éclairement ambiant représentatif de la luminance du fond reçue dans le champ global de vision de l'observateur.

Les particularités et avantages de la présente invention apparaîtront dans la description qui suit donnée à titre d'exemple à l'aide des figures annexées qui représentent :
   – Fig.1, un schéma simplifié d'un système de visualisation d'image lumineuse conforme à la présente invention ;
   – Fig.2, un schéma d'un mode de réalisation du capteur optoélectrique utilisé pour détecter le fond lumineux ;
   – Fig.3, un bloc diagramme d'un système selon la figure 1 ;
   – Figs.4,5 et 6, des schémas relatifs aux différents circuits utilisables dans le cadre d'une réalisation d'un système selon la figure 3.

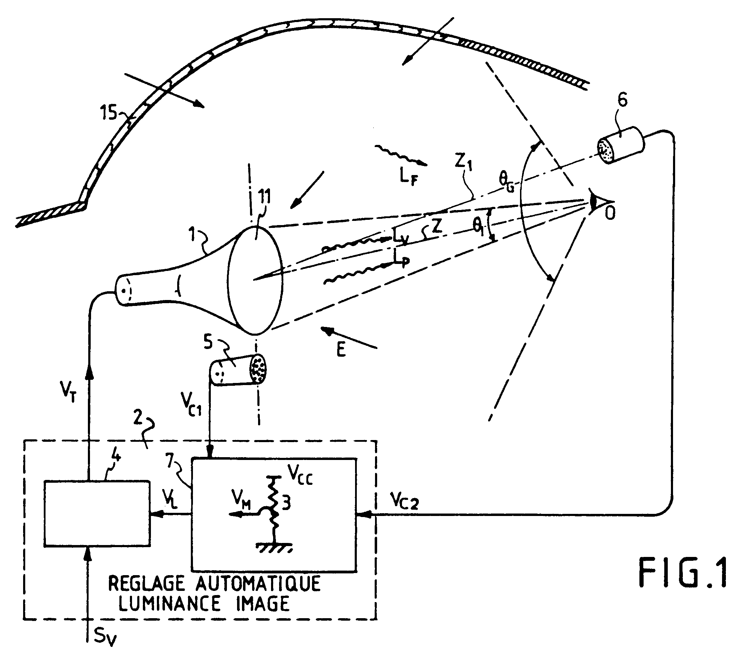

En se reportant à la figure 1, le système de visualisation comporte un dispositif de visualisation 1 d'une image de données lumineuses. Ce dispositif peut être un tube à rayons cathodiques comme représenté, l'image étant visualisée sur l'écran 11 du tube ; on peut également utiliser un écran plat passif (matrice à cristaux liquides) ou actif (panneau à plasma ou électroluminescent). Le signal vidéo $S_v$ à visualiser, issu d'un générateur d'image synthétique ou d'un capteur d'image vidéo, est appliqué au tube 1 à travers un circuit 2 de réglage de la luminance de l'image. Le circuit 2 comporte, de manière conventionnelle, un réglage manuel constitué par un potentiomètre 3 dont la sortie curseur $V_m$ est utilisée, pour agir sur la luminance. Cette action s'effectue dans un circuit correcteur 4, par exemple en modulant le niveau du signal $S_v$ par le paramètre $V_m$. L'action sur le signal $S_v$ consiste en une modification générale des niveaux de luminance ou chrominance, par exemple modulation du niveau du noir, contraste pour une ou plusieurs couleurs, ou encore une modification locale tel un renforcement de contour. Le signal sortant $V_T$ est appliqué au dispositif de visualisation.

Le réglage manuel 3 est inclu dans un circuit générateur 7 qui reçoit d'autres données de réglage pour produire un asservissement automatique de la luminance en fonction des paramètres caractéristiques de l'environnement lumineux.

En effet, il y a lieu de considérer que l'observateur placé en $\theta$ perçoit dans le champ délimité $\theta_I$ d'observation de l'image lumineuse une luminance $L_v$ correspondant à celle émise par l'image lumineuse en 11 dans ce cône. A cette luminance utile se rajoute la luminance parasite $L_p$ renvoyée par le plan 11 sous l'influence de l'éclairage ambiant E. Dans le cas d'un tube cathodique, la luminance $L_p$ résulte de la réflexion diffuse du phosphore du tube soumis à l'éclairement ambiant. De plus, l'observateur couvre un champ visuel global $\theta_G$ de plus grande dimension et est sensible à une répartition de luminance de fond $L_f$ en dehors du cône d'observation $\theta_I$.

Pour tenir compte de l'influence des luminances parasites $L_p$ et $L_f$ qui gênent l'observation et la lisibilité de l'image, le système comporte des circuits de réglage automatique de la luminance de l'image en fonction de ces paramètres. Ces circuits utilisent au moins deux capteurs photoélectriques 5 et 6, dont les signaux détectés $V_{C1}$ et $V_{C2}$ sont appliqués au générateur 7 incluant le réglage manuel 3 pour élaborer un signal $V_L$ de correction appliqué au circuit 4. Un premier capteur 5 est disposé à proximité de l'image lumineuse, en sorte que sa surface photosensible est soumise à un éclairement ambiant E comparable à celui reçu par l'écran de visualisation 11. En conséquence, la sortie $V_{C1}$ du ce capteur est directement proportionnelle à l'éclairement local E dans cette zone et contribue à fournir une information sur la lumière parasite $L_p$ réémise par le plan 11.

Un deuxième capteur 6 se trouve lui placé à proximité de la tête de l'observateur ou légèrement en arrière en sorte de recevoir un éclairage ambiant donnant une information sur la répartition de luminance du fond $L_f$ perçue par l'oeil dans le champ global $\theta_G$ en dehors du champ utile $\theta_I$. Cette information va se retrouver au niveau du signal détecté $V_{C2}$ qui est sensiblement proportionnel à la luminance $L_f$ du fond.

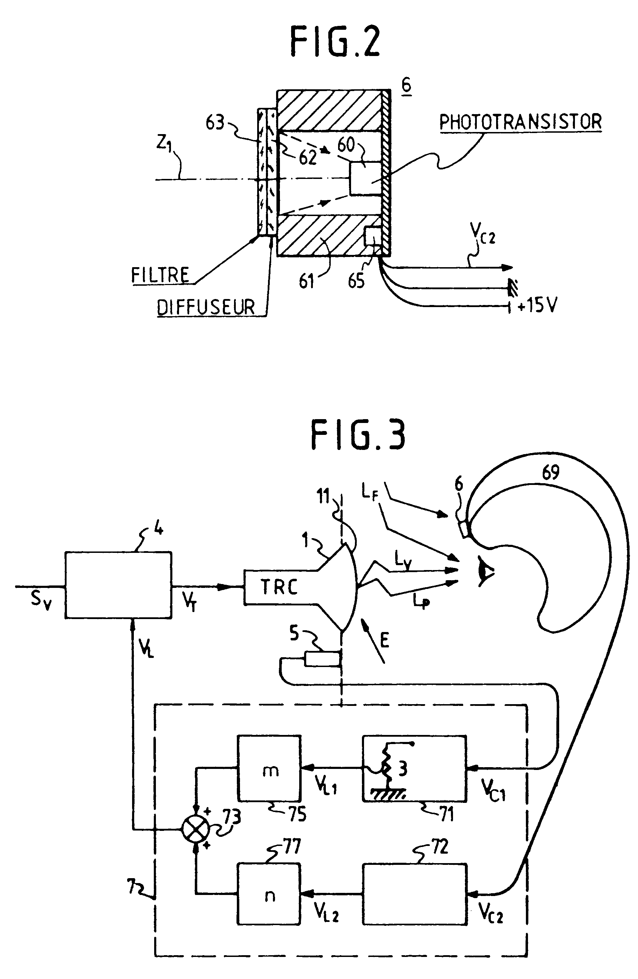

Le capteur 5 ne présente pas de caractéristique particulière et peut être de type conventionnel. Par contre, le capteur 6 pour être efficace peut être conçu selon le mode de réalisation représenté à la figure 2. De conception légère et peu encombrante, le capteur figuré est constitué par un phototransistor 60, par exemple BPX 95C, fixé au fond d'un boîtier 61 qui comporte sur la face opposée un diffuseur 62 et un filtre 63. Le bloc 61 présente ainsi une cavité centrale cylindrique qui peut être de l'ordre de 15mm de profondeur et 12mm de diamètre. L'ensemble est de faibles dimension et masse et peut être fixé aisément sur un casque porté par l'observateur, le pilote dans le cas d'une application aéronautique. Sur la figure 1 est schématisé partiellement la partie vitrée 15 d'un cokpit à travers laquelle est transmise l'éclairage solaire. La caractéristique de sensibilité angulaire du phototransistor 60 est modifiée par le diffuseur 62 et par les dimensions de la fenêtre créée par la cavité interne de façon à obtenir une directivité en site et en gisement comparable à celle de l'oeil. Le filtre 63 est un filtre photopique, c'est-à-dire de caractéristique spectrale comparable à celle de l'oeil pour assurer la correction chromatique du phototransistor 60. La sensibilité du phototransistor 60 est ajustée par un potentiomètre 65 situé à proximité. Les connexions comportent la sortie de détection $V_{C2}$ et une alimentation continue entre +15v et masse.

Le capteur 6 est orienté de manière que son axe Z1 concourt sensiblement avec la direction de vision Z de l'observateur au niveau de l'écran de visualisation comme représenté sur la figure 1. Il sera de préférence monté solidaire de la tête de l'observateur, fixé sur un casque.

La figure 3 représente l'ensemble du système et plus en détail les circuits 7. Ceux-ci comportent principalement les circuits 71 et 72 qui fournissent respectivement les signaux de correction de luminance $V_{L1}$ et $V_{L2}$ à partir des signaux détectés $V_{C1}$ et $V_{C2}$. Ces signaux de correction sont sommés dans le circuit 73 pour former le signal somme résultant $V_L$ appliqué au circuit 4. On peut introduire des circuits intermédiaires pour pondérer ces valeurs $V_{L1}$ et $V_{L2}$ par des coefficients multiplicateurs $\underline{n}$ et $\underline{m}$ lors de la mise au point du système en fonction de la configuration de la cabine de pilotage ou autre lieu d'exploitation envisagé.

Le signal de correction global $V_L$ est donc de la forme $nV_{L1} + mV_{L2}$. Le circuit 71 comporte le réglage manuel 3 et le signal $VL1$ est une fonction $F1(V_{C1}, \theta_m)$ où $\theta_m$ représente la position du réglage manuel. Dans cette expression $V_{C1}$ est égal à $K1.E$ qui indique que le signal détecté est proportionnel à l'éclairement E fourni par l'environnement lumineux. La valeur de correction $V_{L2}$ fournie par le circuit 72 est une fonction $F_2(V_{C2})$ avec $V_{C2} = K2.L_f$ qui exprime la proportionnalité du signal détecté à la luminance moyenne du fond.

Suivant un mode de réalisation la fonction F1 qui est relative à la valeur de correction $V_{L1}$ est de la forme $F1 = (a+b.E).\theta_m$ et la fonction F2 relative au signal de correction $V_{L2}$ est de la forme c $(L_o)^d$. Dans ces expressions a,b,c,d, sont des constantes et $L_o$ une valeur de référence correspondant à une répartition de luminance déterminée pour le réglage.

Dans le cas d'un dispositif de visualisation à rayons cathodiques, la luminance $L_v$ fournie par la visualisation et de la forme $K(V_T)$, $V_T$ étant la tension de commande de la cathode du tube. Le circuit 4 a pour fonction de linéariser la réponse du tube par rapport au signal d'entrée $S_v$ en sorte d'obtenir : $L_v$ = $K3.S_v$, expression dans laquelle on peut écrire : $K3$ = $K4.V_L$, $K3$ et $K4$ étant des constantes. Il en résulte que $L_v$ doit être mis sous la forme $K4.V_L S_v$. La fonction assurée par le circuit 4 peut être mise sous la forme $V_T$ = $F3 (V_L,S_v)$, $F3$ étant déterminé en sorte que : $K(V_T)$ = $K4.V_L.S_v$. Pour un tube cathodique le circuit 4 est un circuit correcteur de gamma et dont le gain est variable en fonction du signal $V_L$. Les circuits 71 et 72 sont alors des circuits de commande de gain en fonction des signaux détectés $V_{C1}$ et $V_{C2}$ donc en fonction des paramètres $L_p$ et $L_f$. Le circuit 4 réalise la linéarisation des commandes en fonction du produit $V_L. S_v$, la tension $V_L$ agit donc sur la pente de la courbe linéarisée de luminance $L_v$ qui est fonction de l'image électrique $S_v$. Les caractéristiques du circuit 72 et les coefficients $\underline{n}$ et $\underline{m}$ sont déterminés par une série de mesures ergonomiques sur le système de visualisation observé par un sujet soumis à un environnement de répartition spatio-temporelle variable influant sur la lisibilité de l'image globale, et/ou en tenant compte du diamètre pupillaire du sujet.

La fonction de transfert décrivant les variations de $V_{L2}$ en fonction de celles de la luminance d'un fond uniforme, plan et blanc $L_o$ a typiquement la forme précitée c $(L_o)^d$ où le coefficient $\underline{d}$ est ajusté, par exemple égal à 0,88. La directivité du capteur est par exemple telle que la demi-sensibilité est atteinte pour une variation de $\pm 10°$ en site et en gisement et le dixième de sensibilité pour une variation de $\pm 30°$ en site et $\pm 45°$ en gisement.

Les coefficients $\underline{n}$ et $\underline{m}$ dépendent de la configuration de la structure environnante, la cabine de pilotage dans le cas d'une application aéroportée. La cellule de mesure 5 d'éclairement en face avant n'est sensible qu'à l'éclairement de la planche de bord, lui-même dépendant essentiellement de l'éclairement latéral ou arrière transmis à travers la verrière et celui produit par des réflexions internes à la cabine.

Le capteur photométrique 6 porté par le casque 69, ou placé légèrement en arrière de la tête du pilote, est sensible d'une part, à la luminance du paysage avant et latéral, d'autre part, à l'éclairement de toute la planche de bord dont le système de visualisation constitue une partie. Ce capteur 6 prend en compte le poids relatif variable de ces paramètres dans la mesure où il est mobile avec la tête du pilote.

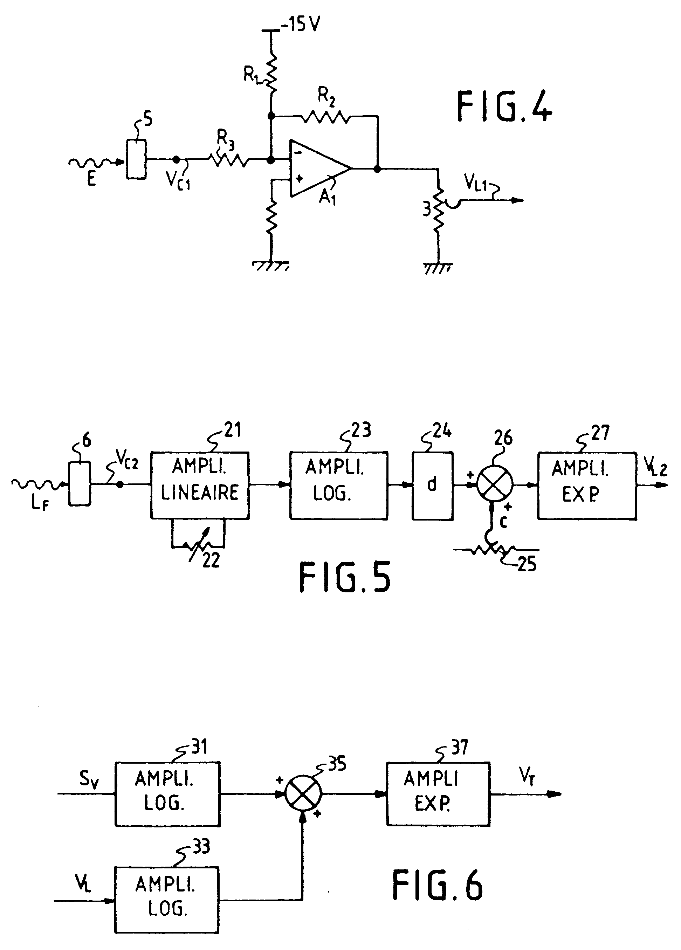

La figure 4, représente un mode de réalisation du circuit 71. Il comporte un amplificateur opérationnel A1 et un réseau de résistances R1,R2,R3 permettant de produire les coefficients $\underline{a}$ et $\underline{b}$ dans l'expression de $V_{L1}$ précédemment indiquée. Le potentiomètre de réglage manuel 3 est placé en sortie de l'amplificateur A1.

La figure 5, est relative au circuit 72. La sortie $V_{C2}$ du capteur 6 est d'abord appliquée à un amplificateur linéaire 21 qui comporte un réglage 22 de constante de temps. Vient ensuite un amplificateur logarithmique 23, puis un circuit de pondération 24 permettant d'introduire le coefficient $\underline{d}$, un potentiomètre 25 qui permet d'introduire le coefficient c, la partie restante comporte le sommateur 26 et l'amplificateur exponentiel 27 qui permet de reformer en sortie le signal VL2 de la forme c.$(L_f)^d$.

La figure 6 est un schéma simplifié du circuit 4. Le signal vidéo $S_v$ est appliqué à un amplificateur logarithmique 31. Parallèlement, le signal de correction $V_L$ est appliqué à un amplificateur logarithmique 33. Les sorties de ces amplificateurs logarithmiques sont sommées dans un circuit sommateur 35 dont la sortie est appliquée à un amplificateur exponentiel 37 pour produire le signal $V_T$.

Le système de visualisation décrit présente de nombreuses variantes conformes aux caractéristiques exposées. Au lieu d'un capteur de part et d'autre on peut considérer qu'il y a plusieurs éléments photosensibles de manière à encore mieux optimiser la lisibilité de l'image en fonction de la répartition spatio-temporelle de l'environnement lumineux. Les capteurs photosensibles sont répartis en partie autour du système de visualisation et pour les autres, soit sur l'observateur lui-même et/ou dans l'habitacle. Les capteurs peuvent être orientés certains vers l'arrière de l'observateur afin de mesurer l'éclairement reçu sur la visualisation, d'autres vers l'avant de l'observateur afin de mesurer les luminances dans une partie ou dans la totalité du champ visuel de l'observateur. Les capteurs placés sur l'observateur ou dans l'habitacle peuvent être orientés vers l'avant de l'observateur afin de mesurer les luminances dans une partie ou la totalité du champ visuel de l'observateur. Les capteurs ont une sensibilité spectrale et temporelle proche du système corticovisuel. La sensibilité des capteurs aux éclairements peut être différente d'un capteur à l'autre, certains étant sensibles à un environnement élevé (éclairement diurne), d'autres à un environnement lumineux faible (éclairement nocturne ou crépusculaire). Chaque capteur est composé d'un, de plusieurs, ou d'une mosaïque de capteurs (photodiodes, photorésistances, phototransistors) précédés d'un système optique ou non. Les capteurs sont couplés à un système de visualisation tête basse, tête haute, tête moyenne, ou tête latérale dans une application aéroportée. Les capteurs peuvent être couplés à un ou plusieurs systèmes de visualisation contenue dans un habitacle aérien, terrestre ou maritime, mobile, ou fixe, dans lequel l'environnement lumineux dans le champ visuel de l'observateur peut varier rapidement ou lentement.

Le système de visualisation peut être destiné à un affichage d'images, de textes, de symboles ou de signaux lumineux simples pour produire un affichage public intérieur ou extérieur (routier, ferroviaire, maritime, aéronautique, etc...). Il est vu par l'observateur sous un angle solide suffisamment faible, pour que le reste du champ entourant le système influe sur la lisibilité de l'information. Dans cette configuration les capteurs orientés vers l'avant de l'observateur peuvent être fixes et prévus pour une position moyenne d'observation.

Le transducteur électrooptique réalisant l'image à partir du signal vidéo $S_v$ est soit un tube à rayons cathodiques, soit un écran plat passif (en transmission ou réflexion) ou émissif, devant lequel est placé un ou plusieurs filtres de transmission commandables électriquement (obturateur à cristal liquide).

La visibilité du dispositif de visualisation peut être ajustée en modifiant électriquement l'émission de lumière d'un transducteur émissif, ou de la source arrière d'un transducteur passif, ou de la transmission d'un filtre additionnel.

## Revendications

1. Système de visualisation d'une image lumineuse de données sur l'écran (11) d'un dispositif de visualisation, comportant un moyen de réglage manuel de la luminosité de l'image et des moyens de réglage automatique de la luminosité de l'image, ces derniers utilisant deux capteurs photoélectriques, un premier capteur (5) monté fixe et disposé à proximité de l'écran et un deuxième capteur (6) pour détecter un éclairement ambiant, ledit système étant caractérisé en ce que ledit premier capteur (5) est orienté de manière à capter un éclairement ambiant représentatif de la luminance ($L_p$) réfléchie par l'écran (11), ledit deuxième capteur (6) étant situé à distance de l'écran pour détecter un éclairement ambiant représentatif de la luminance ($L_f$) du fond reçue dans le champ global de vision ($\theta_G$) de l'observateur.

2. Système selon la revendication 1, caractérisé en ce que les signaux ($V_{C1}$ et $V_{C2}$) issus desdits capteurs (5,6) sont appliqués à un circuit générateur d'un signal de correction (7) comportant ledit moyen de réglage manuel (3) et élaborant un signal de correction ($V_L$) appliqué à un circuit correcteur (4) recevant le signal vidéo ($S_v$) à visualiser et alimentant ledit dispositif de visualisation (1).

3. Système selon la revendication 2, caractérisé en ce que le circuit correcteur (4) présente un gain variable sur action dudit signal de correction ($V_L$).

4. Système selon la revendication 1 ou 2, caractérisé en ce que le deuxième capteur (6) est constitué au moyen d'un boîtier (61) percé pour former une cavité au fond de laquelle est placée un phototransistor (60) et comportant à l'opposé pour la réception du rayonnement, un ensemble optique groupant un filtre photopique (63) et un diffuseur (62).

5. Système selon la revendication 4, caractérisé en ce que ledit deuxième capteur (6) est orienté de manière que son axe ($Z1$) concourt sensiblement avec celui ($Z$) de vision au niveau de l'image visualisée.

6. Système selon l'une quelconque des revendications précédentes, caractérisé en ce que le circuit (7) générateur de signal de correction comporte un premier circuit (71) pour traiter le signal ($V_{C1}$) détecté par le premier capteur (5), ledit premier circuit comportant ledit réglage manuel (3) et produisant un premier signal de correction ($V_{L1}$) en fonction de la position ($\theta_m$) dudit réglage manuel et de l'éclairement extérieur (E) reçu par le premier capteur, un deuxième circuit (72) pour traiter le signal ($V_{C2}$) détecté par le deuxième capteur (6), et produire un deuxième signal de correction ($V_{L2}$) fonction de la luminance du fond ($L_p$) perçue par l'observateur, et un circuit sommateur (73) pour sommer lesdits premier et deuxième signaux de correction et produire un signal somme ($V_L$) appliqué audit circuit correcteur (4).

7. Système selon la revendication 6, caractérisé en ce que des circuits de pondération (75 et 77) sont interposés sur les connexions entre lesdits premier et deuxième circuits (71,72) et ledit circuit sommateur (73) pour introduire des coefficients de pondération (n,m) dont les valeurs sont ajustées lors d'un réglage préliminaire pour optimiser la réponse du système en fonction des données d'implantation (15) et d'exploitation (O,Z).

8. Système selon l'une quelconque des revendications précédentes, caractérisé en ce que le deuxième capteur (6) est disposé à proximité de la tête de l'observateur (O).

9. Système selon la revendication 8, caractérise en ce que le deuxième capteur (6) est monté solidaire de la tête de l'observateur (O).

10. Système selon la revendication 8, caractérisé en ce que le deuxième capteur (6) est monté fixe sur le lieu d'exploitation et situé en arrière de la tête de l'observateur (O).

11. Système selon l'une quelconque des revendications 1 à 7, caractérisé en ce que le deuxième capteur (6) est monté fixe et à une distance de l'image lumineuse correspondant à une position moyenne d'observation, ladite image étant produite par un affichage public lumineux.

## Patentansprüche

1. System für die Anzeige eines Leuchtbildes von Daten auf dem Bildschirm (11) einer Anzeigeeinrichtung, mit einem manuellen Einstellmittel für die Bildhelligkeit und mit automatischen Einstellmitteln für die Bildhelligkeit, wobei diese letzteren zwei photoelektrische Meßwertaufnehmer verwenden, einen ersten Meßwertaufnehmer (5), der fest angebracht und in der Nähe des Bildschirms angeordnet ist, und einen zweiten Meßwertaufnehmer (6) für die Erfassung einer Umgebungsbeleuchtung, wobei das System dadurch gekennzeichnet ist, daß der erste Meßwertaufnehmer (5) so orientiert ist, daß er eine Umgebungsbeleuchtung aufnimmt, die die vom Bildschirm (11) reflektierte Leuchtdichte ($L_p$) darstellt, wobei sich der zweite Meßwertaufnehmer (6) in einem Abstand vom Bildschirm befindet, um eine Umgebungsbeleuchtung zu erfassen, die die im gesamten Sehfeld ($\Theta_G$) des Beobachters empfangene Grundleuchtdichte ($L_f$) darstellt.

2. System gemäß Anspruch 1, dadurch gekennzeichnet, daß die von den Meßwertaufnehmern (5, 6) ausgegebenen Signale ($V_{C1}$ und $V_{C2}$) in eine das manuelle Einstellmittel (3) aufweisende Schaltung für die Erzeugung eines Korrektursignals (7) eingegeben werden, wobei diese Erzeugungsschaltung (7) ein Korrektursignal ($V_L$) entwickelt, das in eine Korrekturschaltung (4) eingegeben wird, die das anzuzeigende Videosignal ($S_V$) empfängt und die Anzeigeeinrichtung (1) versorgt.

3. System gemäß Anspruch 2, dadurch gekennzeichnet, daß die Korrekturschaltung (4) einen vom Korrektursignal ($V_L$) abhängigen, variablen Verstärkungsfaktor aufweist.

4. System gemäß Anspruch 1 oder 2, dadurch gekennzeichnet, daß der zweite Meßwertaufnehmer (6) von einem Gehäuse (61) gebildet wird, das durchbohrt ist, um einen Hohlraum auszubilden, auf dessen Boden ein Phototransistor (60) angeordnet ist und der auf der gegenüberliegenden Seite eine optische Einheit für den Empfang der Strahlung aufweist, in der ein photooptisches Filter (63) und ein Diffusor (62) zusammengefaßt sind.

5. System gemäß Anspruch 4, dadurch gekennzeichnet, daß der zweite Meßwertaufnehmer (6) so orientiert ist, daß seine Mittelachse (Z) im wesentlichen auf Höhe des angezeigten Bildes die Beobachtungsachse (Z) schneidet.

6. System gemäß einem der vorangehenden Ansprüche, dadurch gekennzeichnet, daß die Schaltung (7) für die Erzeugung eines Korrektursignals versehen ist mit einer ersten Schaltung (71) für die Bearbeitung des vom ersten Meßwertaufnehmer (5) erfaßten Signals ($V_{C1}$), wobei die erste Schaltung den manuellen Einsteller (3) umfaßt und in Abhängigkeit von der Position ($\Theta_m$) des manuellen Einstellers und der vom ersten Meßwertaufnehmer empfangenen äußeren Beleuchtung (E) ein erstes Korrektursignal ($V_{L1}$) erzeugt, einer zweiten Schaltung (72) für die Bearbeitung des vom zweiten Meßwertaufnehmer (6) erfaßten Signals ($V_{C2}$) und für die Erzeugung eines zweiten Korrektursignals ($V_{L2}$), das von der vom Beobachter empfangenen Grundleuchdichte ($L_p$) abhängt, und einer Summationsschaltung (73) für die Summierung des ersten und des zweiten Korrektursignals und für die Erzeugung eines Summensignals ($V_L$), das in die Korrekturschaltung (4) eingegeben wird.

7. System gemäß Anspruch 6, dadurch gekennzeichnet, daß in die Verbindungen zwischen der ersten und der zweiten Schaltung (71, 72) und der Summationsschaltung (73) Gewichtungsschaltungen (75 und 77) eingesetzt sind, um Gewichtungskoeffizienten (n, m) einzuführen, deren Werte bei einer Voreinstellung eingestellt werden, um die Reaktion des Systems in Abhängigkeit von den Einwirkungsdaten (15) und von den Nutzungsdaten (O, Z) zu optimieren.

8. System gemäß einem der vorangehenden Ansprüche, dadurch gekennzeichnet, daß der zweite Meßwertaufnehmer (6) in der Nähe des Kopfes des Beobachters angebracht ist.

9. System gemäß Anspruch 8, dadurch gekennzeichnet, daß der zweite Meßwertaufnehmer (6) so angebracht ist, daß er mit dem Kopf des Beobachters (O) verbunden ist.

10. System gemäß Anspruch 8, dadurch gekennzeichnet, daß der zweite Meßwertaufnehmer (6) an seinem Einsatzort fest angebracht ist und sich hinter dem Kopf des Beobachters (O) befindet.

11. System gemäß einem der Ansprüche 1 bis 7, dadurch gekennzeichnet, daß der zweite Meßwertaufnehmer (6) fest und in einem einer mittleren Beobachtungsposition entsprechenden Abstand vom Leuchtbild angebracht ist, wobei das Bild von einer öffentlichen Leuchtanzeige erzeugt wird.

**Claims**

1. A device for viewing a data light image on the screen (11) of a viewing device, comprising a manual regulating means for the luminosity of the image and automatic regulating means for the luminosity of the image, said latter means utilizing two photoelectric sensors, that is to say a first sensor (5) mounted in a fixed manner and positioned in the vicinity of the screen and a second sensor (6) in order to detect ambient illumination, the said system being characterized in that the said first sensor (5) has an alignment such that it detects ambient illumination representative of the luminance ($L_p$) reflected by the screen (11), the said second sensor (6) being positioned at a distance from the screen in order to detect ambient illumination representative of the luminance ($L_f$) of the background received in the field of vision ($\theta_G$) of an observer.

2. The system as claimed in claim 1, characterized in that the signals ($V_{C1}$ and $V_{C2}$) from the said sensors (5 and 6) are applied to a circuit generating a correction signal (7) comprising the said manual regulation means (3) and processing a correction signal ($V_L$) applied to a correction circuit (4) receiving the video signal ($S_v$) to be viewed and feeding the said viewing device (1).

3. The system as claimed in claim 2, characterized in that the correction circuit (4) has a variable gain with respect to the action of the said correction signal ($V_L$).

4. The system as claimed in claim 1 or in claim 2, characterized in that the second sensor (6) is constituted by a casing (61) with a hole in order to form a cavity at the bottom of which a phototransistor (60) is placed and comprising in an opposite for receiving the radiation, an optical arrangement comprising a photo-optical filter (63) and a diffusor (62).

5. The system as claimed in claim 4, characterized in that the said second sensor (6) is directed in such a manner that its axis substantially coincides with the vision axis (Z) at the level of the image being viewed.

6. The system as claimed in any one of the preceding claims, characterized in that the circuit (7) for generating a correction signal comprises a first circuit (71) in order to process the signal ($V_{C1}$) detected by the first sensor (5), the said first circuit comprising the said manual regulating means (3) and producing a first correction signal ($V_{L1}$) as a function of the position ($\theta_m$) of the said manual regulation and of the exterior illumination (E) received by the first sensor, a second circuit (72) in order to process the signal ($V_{C2}$) detected by the second sensor (6) and to produce a second correction signal ($V_{L2}$) as a function of the background illumination ($L_p$) perceived by the observer, and a summating circuit (73) in order to summate the first and the second correction signal and produce a sum signal ($V_L$) applied to the said correction circuit (4).

7. The system as claimed in claim 6, characterized in that weighting circuits (75 and 77) are intermediately positioned on the connections between the said first and second circuits (71 and 72) and the said summating circuits (73) in order to introduce weighting coefficients (n and m) whose values are adjusted during preliminary regulation in order to optimize the response of the system as a function of implantation (15) and use (O and Z).

8. The system as claimed in any one of the preceding claims, characterized in that the second sensor (6) is positioned in the vicinity of the head of the observer.

9. The system as claimed in claim 8, characterized in that the second sensor (6) is mounted so as to move with the head of the observer (O).

10. The system as claimed in claim 8, characterized in that the second sensor (6) is mounted so as to be secured to the position of use and is placed to the rear of the head of the observer (O).

11. The system as claimed in any one of claims 1 to 7, characterized in that the second sensor (6) is mounted stationary and at a distance from the luminous image corresponding to an average observation position, said image being produced by a public luminous display.

REGLAGE AUTOMATIQUE
LUMINANCE IMAGE

FIG.1

# FIG.2

PHOTOTRANSISTOR

$Z_1$

63

62  60

$\underline{6}$

FILTRE

DIFFUSEUR

61  65

$V_{C2}$

+15V

# FIG.3

$S_v$

4

$V_T$

TRC

1

11

$L_F$

$L_V$

$L_P$

6

69

5

E

$V_L$

m

75

$V_{L1}$

3

71

$V_{C1}$

73

n

77

$V_{L2}$

72

$V_{C2}$

72

# FIG.4

# FIG.5

# FIG.6